# EUROPEAN PATENT APPLICATION

(11) **EP 3 050 610 A1**
(43) Date of publication of application: **03.08.2016**
(21) Application number: 14849627.6
(22) Date of filing: 23.09.2014
(51) Int. Cl.: B01D 46/00

(54) **AIR CLEANING SYSTEM**

(30) Priority: 24.09.2013 CN 201320591570 U
(71) Applicant: Law, Sui Chun, Hong Kong 999077 (CN); Chan, Yiu Wai, Hong Kong 999077 (CN)
(72) Inventor: Law, Sui Chun, Hong Kong 999077 (CN); Chan, Yiu Wai, Hong Kong 999077 (CN)
(74) Representative: Becker Kurig Straus
(86) International application number: PCT/CN2014/087212
(87) International publication number: WO 2015/043458

(57) **Abstract**

The present invention disclosed an air purification system, comprises a first housing combined with a second housing, and the combination of the two housing form the whole or partial of casing of the air purification system; the said first and second housings both comprise with respectively an air inlet and an air outlet;a filter is housed within the casing; the filter comprises a filter frame and a filter materials wherein the filter materials is equipped within the filter frame; wherein the air purification system further comprises a sealing strap to prevent air leakage; a portion of sealing strap is affixed to one side of the filter frame, whereas the said side of the filter frame is facing to the air inlet, and/or the inside wall of the casing; the other portion of the air sealing strap is sandwiched between the junction of the first and the second housings.

## Description

### Technical Background

The pollutants in air are existed in two major physical forms, one is the particulates matters such as dust, bacteria, fungi and particles which are with different physical sizes. The particulate matters are formulated by the combination of different matters and having rather complicated chemistry structures. They have the physical sizes ranges from 0.01 to 1 microns meter in dimension. Another type of pollutant is the gaseous type pollutants, such as odor, volatile organic compounds and other chemical elements. The gaseous pollutants composing of several kinds of chemical elements having simple chemical structure. They are small in and having a physical dimension in the ranges from 0.1-1 nanometers.

To deal with any form of pollutants, the respective chemical and physical natures of the pollutants will be of concerned and different types of filtering materials or filters will be employed. Fan will be used to drive the air which containing the pollutants, to flow through the filtering materials or filters during purification.

In the case when the filtration method being employed does not requires the polluted air to resides long within the filters or the filtering materials, The greater the airflow volume and rate induced by the fan will be generally results more effectively purification. The concentration of pollutants in the polluted air will be reduced at a faster rate. Therefore, a higher airflow volume purification system will be more preferable when purifying a large volume of the polluted air. For example, to filter the air which contains the particulate matters such as PM2.5 / PM10 pollutants, those air purification device or system which can cater higher airflow rate and airflow volume is preferable. Bases on the US AHAM standard, the Clean Air Delivery Rate (CADR) are higher ranked for the air purification system having a higher airflow volume. These air purification system should be employed for large floor area, or at where the pollutants levels are high. A quick and effective purification can then be achieved.

Air Purification system with high airflow volume will consume more power. Nevertheless, the purification efficiency (air cleaning efficiency) of an air purification system may not always be the proportionally achieved respective power consumption (energy consumption) at ferent airflow rates. In most case, where the air purification system not yet reached to its limitation, the increased of air flow volume will increase the amount of air to be purified, it is nevertheless always failed to reached to an expected air purification level. For example, at lower an air flow volume w here an a verage energy consumption of 5 joule is required to purify every unit volume of polluted air (the air which contains the pollutants), when airflow volume is doubled, and the energy consumption become doubled, it is nevertheless, the amount of polluted air to be purified never reach to a doubled level as if it is expected while the power consumption is 10 joule. In reverse, the amount of polluted air being purified just reach to a level as if the energy consumption was at 7 joules. The main reason for this was the gap which exist between filter and the casing of the air purification system. This gap is generally inevitable existed. It is unavoidable as to allow the filter replacement be easily done, for there always minor differentiation in the dimension of the new and old filters. However, this gap also lead to the "leakage" of polluted air, which the polluted air bypass the filters during purification.

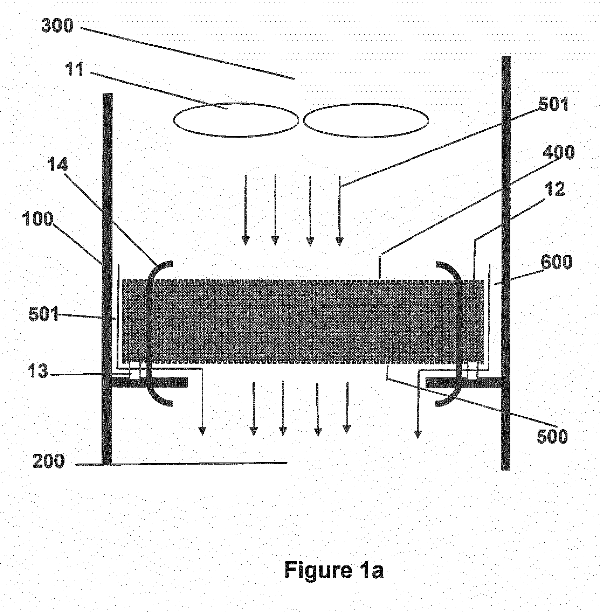

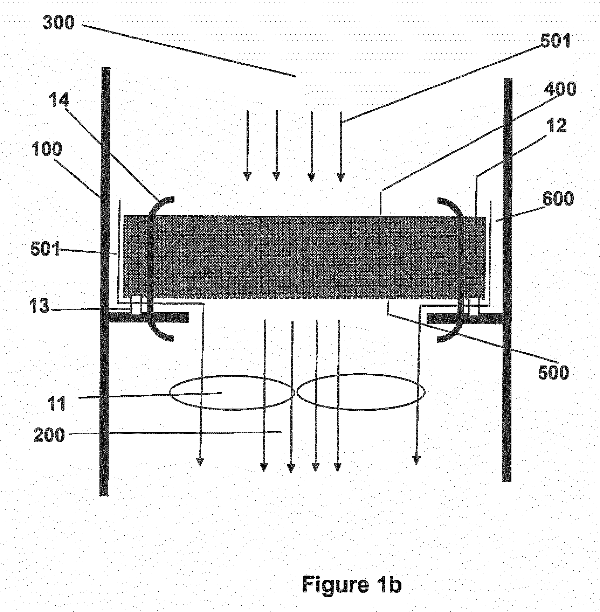

Figure 1a and Figure 1b shows the side views of a conventional air purification system. The conventional air purification system includes a casing 100, the fan 11 and a filter 12. Filter 12 is equipped at the upstream position (Fig. 1a) or the downstream position (Fig. 1b) of the fan 11. The housing 100 comprises an air inlet 200 and an air outlet 300.

The front side 400 of the filter 12 is being defined as area which the polluted air enters, the reverse side 500 is the side opposite to the front side 400 of the filter. The peripheral of the front side 400 (Fig. 1b) or the peripheral of the reverse side 500 (Fig. 1a) of the filter frame 12 is provided with sponge or gasket 13, clip(s) or clasp(s) 14 and/or the like, to buckle the filter 12 securely within the casing 100.

When the fan 11 is in operation, the air containing pollutants 501 will be blown from the air inlet 501 into the air purification system 300 . It is then brought to the front side 400 of the filter 12 (Fig. 1a) or being drawn to pass through filter 12 from the front side 400 (Figure 1b). An unavoidable gap 600 is presence between the filter 12 and the casing 100 of the air purification system, some polluted air 501 therefore bypass the filter 12 through the gap 600 which exists between the filter 12 and the casing 100. Some polluted air is being discharged without purification, as a result of such "air leakage". Owing to the" air leakage", certain power consumption for the operation of the fan 11 has been wasted.

The adding of sponge or gasket seal 13, with the further application of clips or clasp14 and/or the like to buckle the filter 12 in the casing 100 increase the complexity on manufacturing for the air purification system. However, the "air leakage" by the gap cannot be completely eliminated. In addition, the intensity of clip(s) and clasp(s) 14 for buckling is hard to fine-tune to good-fit during production. Too loose the buckling will not solve the "air leakage" problem. Too tight the buckling will induce pressure onto the filter 12. At high airflow volume, further "air leakage" by the gap will be induced and lead to more serious wastage of energy.

### Summary of Invention:

To solve the above addressed problems, a particularly designed cost-effective air purification system is provided herein, all pollutants in the air will be forced go into the filter for a completed purification. The air purification effectiveness is maintained at least power consumption. Th e air purification system in the present invention includes a first housing combined with a second housing, and the combination of the two housing form the whole or partial of casing of the air purification system. The said first and second housings both comprise with respectively an air inlet and an air outlet, the filter is housed within the casing, the filter comprises a filter frame and a filter materials; the filter materials is equipped within the filter frame. The air purification system further comprises a sealing strap to prevent air leakage; a portion of sealing strap is affixed to one side of the filter frame, whereas the said side of the filter frame is facing to the air inlet, and/or the inside wall of the casing; this portion of sealing strap being pressed onto the filter frame by the air pressure, withstand the air pressure which come from the air inlet ; the other portion of the air sealing strap is sandwiched between the junction of the first and the second housings.

In one embodiment, the sealing strap is made with flexible material.

In one embodiment, the flexible material is polyethylene film.

In one embodiment, the air purification system further comprising a fan located at the air inlet side, blowing the air toward the filter.

In one embodiment, the air purification system further comprising a fan located at the air outlet side, the fan drawing air from the filter.

In one embodiment, the filter is accommodated within a storage space of the first housing.

In one embodiment, the filter is accommodated within a storage space of the second housing.

In one embodiment, a portion of filter is accommodated within a storing space inside the first housing and another portion of the filter is accommodated within a storing space inside the second housing.

In one embodiment, the first and second housings are provided at the junction respectively the mutually engaged protruded and recessed parts of serrations.

In one embodiment, the adhesive glue is employed so that the sealing strap and the edge of the filter frame is being sticked together.

In one embodiment, the adhesive glue is employed so that first housing and the second housing is being bonded together.

In one embodiment, the sealing strap is adhered with adhesive glue with low to medium degree level of adhesiveness.

In one embodiment, further comprising reinforcement component to reinforce the first and second housings, when they are being assembled to bind together.

In one embodiment, the reinforcement components is provided at the outer side of casing.

When the airflow rate or air flow volume of the air purification system is increased, the positive pressure exerts toward the filter will be increased. For the conventional type of air purification system, the increase of positive air pressure exerted toward the filter will increase the risk of air leakage, causing the polluted air to bypass the filter and be discharged from the air purification system without any purification. With the embodiment of the air purification system as mentioned in the present invention, the positive pressure exerted on the filter frame will intensify the force being exerted toward the sealing strap, which will further strengthened the effect of the sealing. The risk the polluted air to be leaked and/or by-passing the filter before having any purification will not be increased due to the increase of the airflow volume and/or rate. On contrary, the polluted air to be prevented from "leaked" or bypassing the filter. When all the air are forced to pass through across the filter, a 100% effective filtration process is ensure to be achieved. In the process of air purification, as the junction of first and the second housings is not the part to withstand airflow pressure, no deformation nor air leakage problem be occurred as a result of increasing the airflow volume.

The air purification system present in this invention can be applied to air purification system which employ any method of filtration and adsorption, or to any purification system which chemical reaction process is being employed. At the same time when helping to improve air quality, the filter cartridge material is 100% be utilized. Furthermore, all the electrical power to drive the motor for the fan in the air purification system are ensured to be used for air purification. A maximum air purification efficiency is therefore achieved.

The present method is different from the general method where just some soft sponge, clips, and clasp are used as applied by most manufacturers to prevent the air leakage. The filter materials and filter cartilage materials will not be deformed as they will not experience a localized pressure. More importantly, when the airflow volume in an air purification system is increased, the sealing strap bearing the function of reduce the air leakage will play a more important role. The present invention provides a superior method over the traditional method which employ just use soft sponge, clips, and clasps, where all the polluted air is ensured to pass through the filter materials.

### Brief Description on Figures

Figures 1a and 1b referring to a schematic view showing the structure of when a filter is installed in to a conventional type of air purification system;
Figure 2-7 illustrates the designs of different embodiments of the air purification system, wherein the sealing strap is employed to prevent any of the polluted air from being leaked and be discharged before purification;

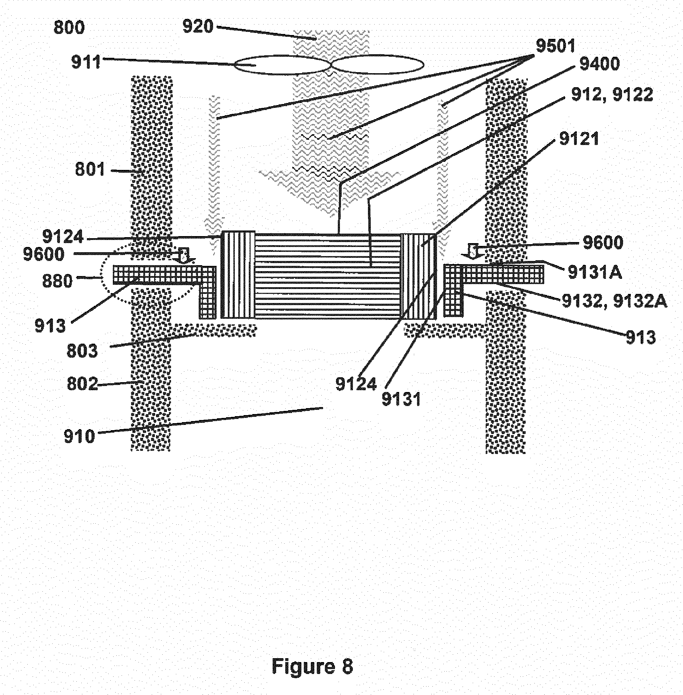

Figure 8 illustrates a schematic on one wrong application of sealing strap;
Figure 9 illustrates a particulate removal efficiency performance chart before and after increasing of the airflow volume by the air purification system of the present invention and the air purification system of the same type.

### Details description the embodiment:

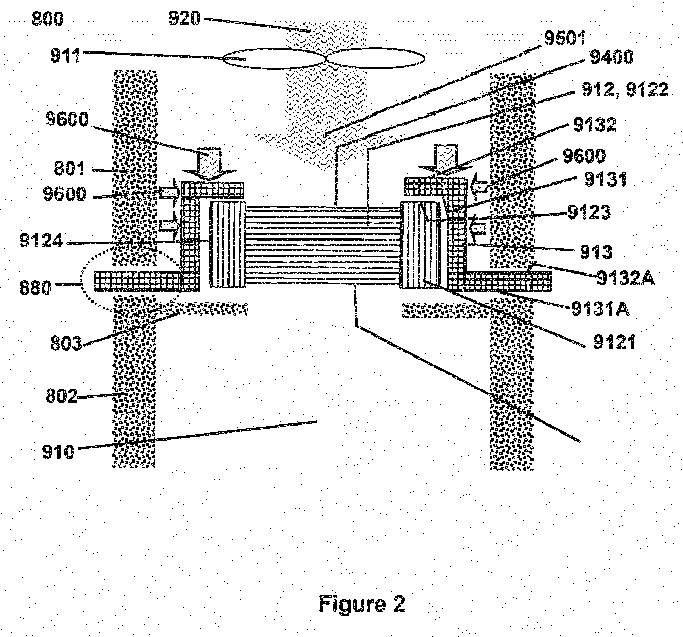

Figure 2 illustrate a side view of one embodiment of an air purification system. The air purification system 800 includes a first housing 801 and second housing 802; a first housing 801 and second housing 802 may be combined to form a whole or a partial casing of an air purification system 800. An air inlet 910 and air outlet 920 are located respectively at first housing 801 and second housing 802 of the air purification system 800.

The air purification system 800 further comprises a blower or fan 911, filters 912 and sealing strap 913 to prevent air leak. Wherein, the said first housing 801 or second housing 802 further comprises supporting frame 803 to support the filter 912 to be in position.

The filter 912 comprises the filter frame 9121 and the filter materials 9122. The filter materials 9122 is surrounded and protected by the filter frame 9121; the filter 912 is being housed within the casing, which is formed by the combined of the first housing 801 and second housing 802. In the present embodiment, the filter 912 is located downstream of the fan 911. The front side 9400 of the filter 912 is defined as the side facing the polluted air 9501. When turning on the fan 911, the polluted air which containing pollutants will enter the air purification system 800 from its air inlet 920, it is being blown into the front side 9501 of the filter 912.

The sealing strap 913 is in a long belt or a ring form bearing with flat surface and width in shape. When the filter frame 9121 is in a quadrilateral shape, the air sealing strap 913 can be a straight elongated shape, whereas at least four air sealing strap 913 connecting together to completely surrounded and attached to the quadrilateral filter frame 9121. The connection point of the sealing strap are located at the four corners of the filter frame 9121, there some overlapping area for the sealing strap at the connection points, to prevent the bypass of air over the filter 912. When the filter frame 9121 in circular shape, the air sealing strap 913 will be in a circular shape.

A partial portion of the sealing strap 913 is being attached onto the front side 9123 of the filter frame 9121, facing to the air inlet, and a portion of it is attached onto the side of the filter frame 9121 which it is facing toward the inner surface of the casing, i.e., the peripheral side 9124 of the filter frame 9121. The forward side 9131 of the sealing strap 913 is referred to the side of the sealing strap 913 which facing toward the front side 9123 of the filter frame 9121, whereas the backward side 9132 of the sealing strap 913 is referred to the other side. The forward side 9131 of the sealing strap 913 contains some adhesive glue, which help to fix the sealing strap 913 onto the filter frame 9121 of the filter 912. The adhesive glue having the adhesiveness in low to medium level; the repeat attaching and detaching of the sealing strap 913 from the filter frame 9121 will not let to any remaining adhesive glue at the filter frame 9121.

The other partial portion of the sealing strap 913 is placed at the junction between the first housing 801 and second housing 802. A "sandwich" 880 structure is therefore formed. In the sandwich structure, the side of the sealing strap 913 facing to the second housing 802 is defined as the forward side 9131A, the side of the sealing strap facing to the first housing 801 is defined as the backward side of the 9132A of the sealing strap. At the sandwiched structure, the forward side 9131A and backward side 9132A of the sealing strap 913 contains some adhesive glue which the adhesiveness is in the low to the medium level; when the "sandwich" structure is detached, there will not be any adhesive glue be remained at the first 801 and the second 802 housing.

When the air purification system 800 is in operation, the air blowing toward the front side 9400 of filter 912. The air pressure 9600 generated from the air flow is exerted onto the backward side of 9132 of the sealing strap 913. This results the sealing strap 913 further be more firmly pressed and affixed onto the partial portion of the filter 912, the front side 9123 of the filter frame 9121. On another hand, with the "sandwich" structure 880, the bypass of the not yet being purified air, the polluted air, through the peripheral gap 9501 of the filter 912 will therefore completely be avoided.

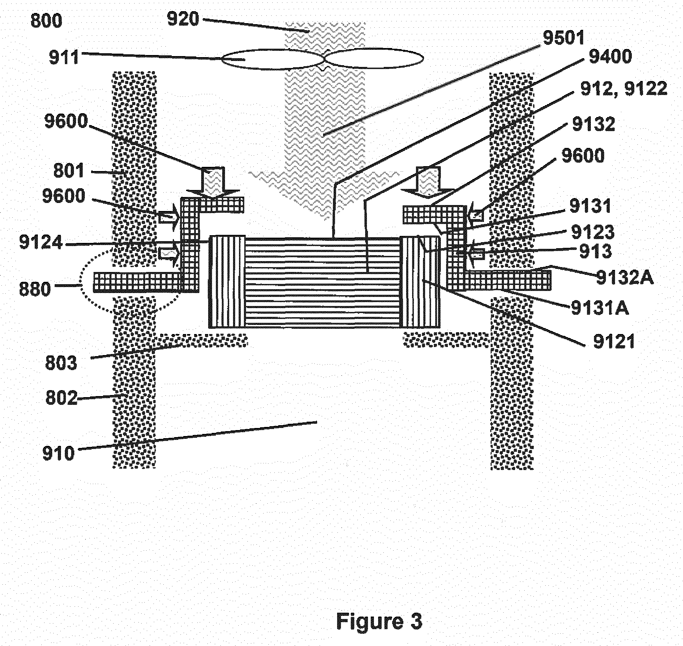

In the embodiment as shown in the figure 3, the filter 912 is accommodated within the storage space inside the first housing 801 and another portion of the filter. is accommodated within the storage space inside the second housing 802. The sealing strap 913 is stick onto the front side 9123 of the filter frame 9121 or its peripheral 9124. The sealing strap 913 is in the form of Z shape.

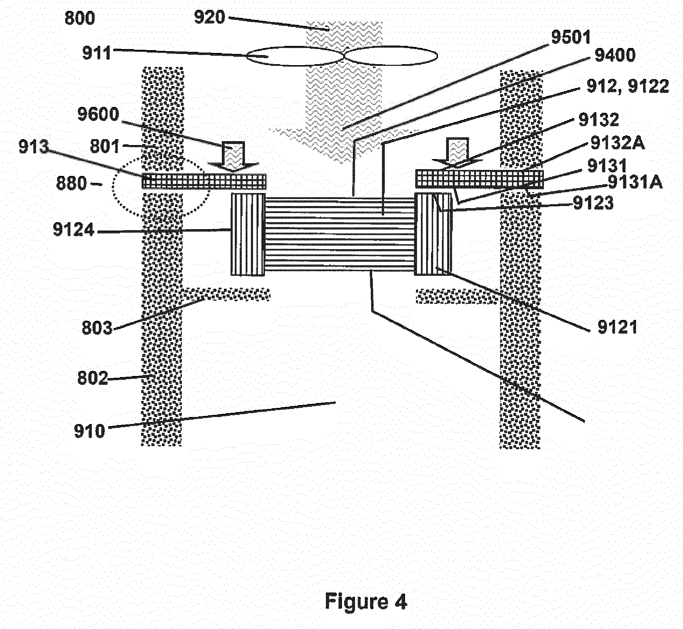

In the embodiment as shown in the figure 4, the filter 912 is accommodated within the storage space inside the second housing 802. In this case, the sealing strap is affixed onto the front side 9123 of filter frame 9121. The sealing strap is in "_" shape.

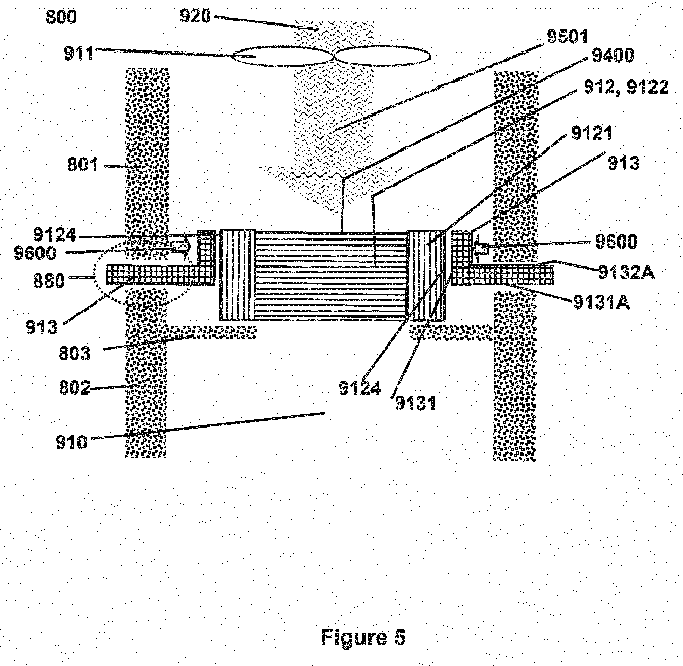

In the embodiment shown in the figure 5, a partial potion of the filter 912 is accommodated with the storage space inside the first housing 801, and another partial portion of the filter is accommodated within the storage space inside the second housing 802. In this case, the sealing strap 913 is affixed to the peripheral 9124 of the filter frame 9121. The sealing strap is in the form of L-shaped.

Regardless which position within the casing the filter 912 will be placed, the backward side 9132 of the sealing strap 913 must be the side to withstand the air pressure. In the above described embodiment, in installation method for the filter 912 to the first housing 801 and the second housing 802 may also be defined as the same meaning for the installation as in a front housing and a rear housing, or in an upper housing and a lower housing.

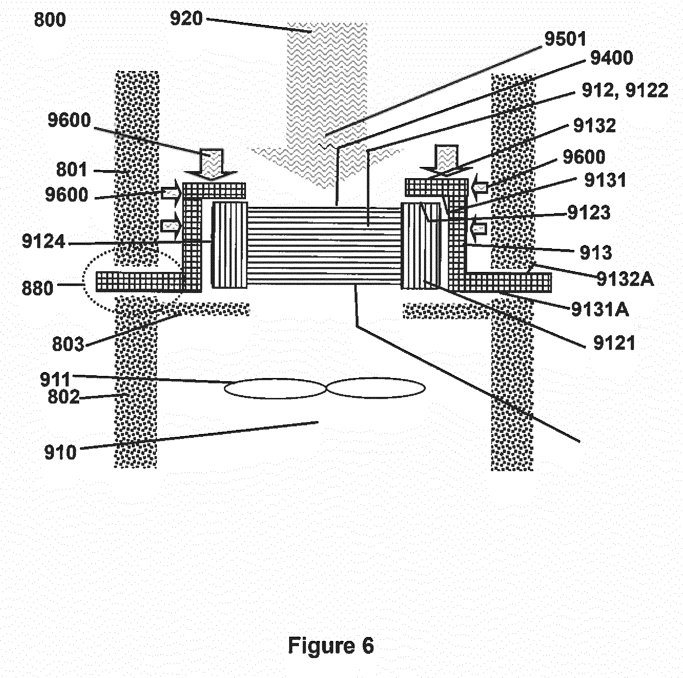

When referring to the figure 6, based on the fundamental embodiments as described previously, the fan 911 is installed within the storage space of the second housing 802, i.e. in a position downstream of the filter 912.

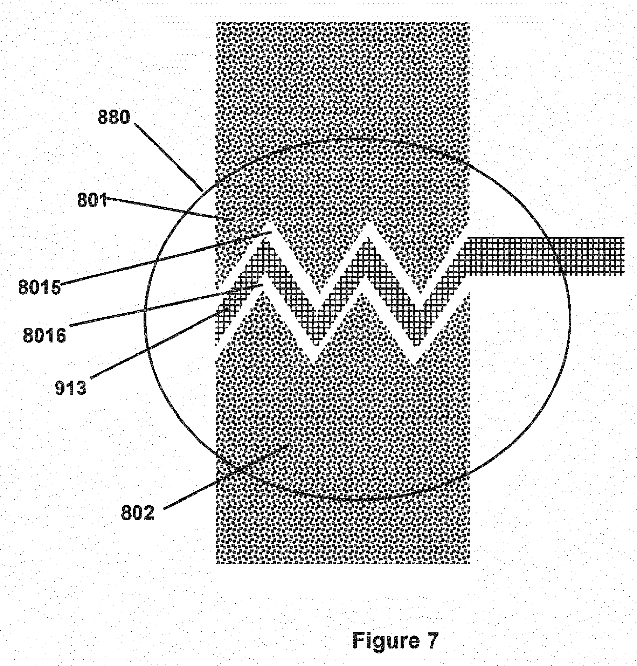

In addition to all of the above-described embodiments, one may further refer to the figure 7, wherein the first housing 801 and second housing 802 are provided with mutually engaged protruded and recessed parts of serrations. The recessed surface 8015 of the serrations located in the first housing 801, which is well is fitted to the corresponding protruded surface 8016 of the second housing 802. The sealing strap 913 is made of some flexible material, such as polyethylene film, etc., it is being interposed in the junction between the first housing 801 and second housing 802.

It will also be appreciated that other method for putting together the first housing 801 and the second housing 802, which the method is similar to the de scribed mutually engaged protruded and recessed parts of serrations, may be employed to improve and further enhance the sealing. Other components such as the outer clip and clasps can be employed for further reinforce the housing when putting them together to form the casing.

When airflow rate within an air purification system is increased, or when the airflow volume is increased, the positive air pressure exerted onto the filter will then be increased. For the conventional air purification system, the problem of air leakage or the situation where the polluted air bypassing the filter and be discharged before receiving any purification will always happened. Nevertheless, with the air purification system having the features as described in the above mentioned embodiment, the sealing strap will be affixed even more tightly and be pressed even more firmly onto the filter frame, Thus, increasing the airflow volume will never higher the risk of air leakage or if the polluted air will bypassing the filter. In reverse, the polluted air will be more effectively stopped from bypassing, the polluted air are all forced to go into the filter. A completed filtration process is therefore achieved. Since the junction at where first and the second housing being assembling together is not the part of the system to withstand the air pressure, the problem of air leakage or casing become deforming will not be occurred.

The air purification system mentioned in this invention can be applied to any type of purification system including that employing the method of filtration, adsorption, and chemical reaction methods for air purifying. At the same time to improve the air quality, the materials inside the filter can be completely utilization for purification. In addition, the energy consumed was used to optimized the fan motor within the air purification system in operation, thus the highest purification efficiency is achieved.

Unlike the conventional manufacturer, who just merely buckling the filter unto the air purification system firmly using the sponge, clips, clasps or applied with the method of the like, the filter as described in the present invention will not be deformed for there are no localized pressure being exerted on the filter. More importantly, the increase of the airflow volume will further enhance the functional effect of the sealing strap, making it more firmly be affixed onto the filter, and hence the risk of air leakage is even lowered. This is an environmental method as it ensure all materials in the filter be completely utilized. This method is superior as compared to the conventional type which just using the sponges, clips, clasps or the materials of the like.

It should be noted that, when the forward side 9131, 9131A of the sealing strap 913 (i.e. the side of the sealing strap which it is affixed onto the filter frame 9121) is being employed to withstand the air pressure generated by the operation of fan 911 of the air purification system (i.e., the forward side of the sealing strap is facing toward the polluted air 9501), it cannot help to affix the sealing strap 913 firmly on the filter frame 9121. This features is not belonged to any embodiment which described in this invention. This will not help to prevent polluted air 9501 stopping to bypass the air filter. as the sealing strap 913 cannot be pressed onto the filter frame 9121 by the airflow. When the air pressure is increased due to the increase of airflow rate or volume, instead of having the sealing strap affixing firmly onto the filter, a gap can easily be created, and the increased airflow volume will increase the risk of air leakage, the polluted air will bypass the filter and be discharged without any purification.

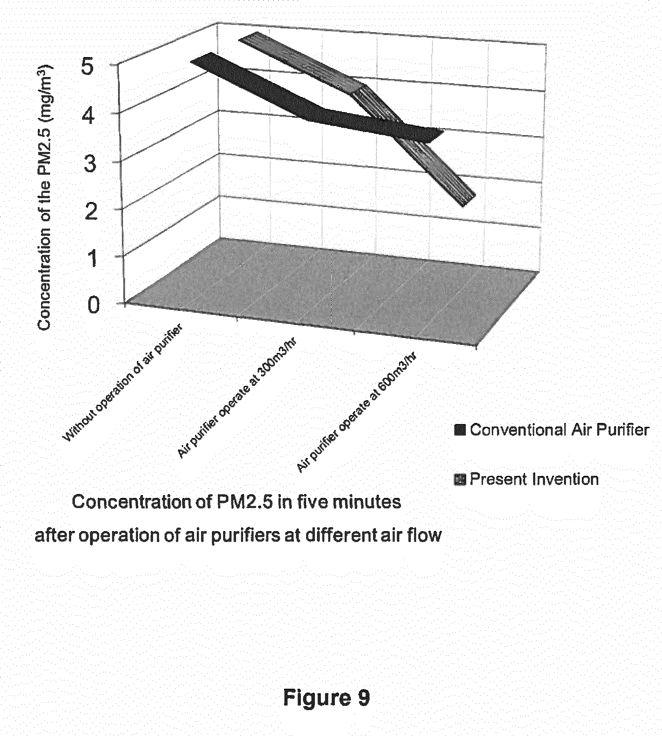

Figure 9 is illustrate a particulate removal efficiency performance chart before and after increasing of the airflow volume by the air purification system of the present invention and the air purification system of the same type. In a room where having a floor area of 100 m² with 4 meters headroom, cigarettes are lighted so that to create a dusty environment, where the particulate matter (PM2.5) reach to a level of 5mg / m3 (milligram per cubic meter) environment.

If the air purification system as shown in figure 1a (or Figure 1b) is used, at an air flow rate of 300 m³/hr (cubic meters / hour) may, within 10 minutes reduce the PM2.5 level from 5mg / m³ to 4mg/m³ (ie, the filter is able to reduce the Pm2.5 to 2.5 mg/m³ in 10 minutes), when airflow rate is doubled to 600 m³/hr, it can only, however, in 10 minutes reduced the PM2.5 from 5mg / m³ to 3.75 mg / m³, instead of the 3 mg / m³.

If the air purification system as shown in figure 2 of the present invention is employed, when the air flow rate being increased to 500m³/hr, which can, in 10 minutes reduce the PM2.5 from 5mg/m3 to 1.8 mg/m³, more than expected level 3mg/m³. With the method employed in the present invention, the increases the volume air flow, the sealing strap play more dominate role to prevent the "air leakage". Air pollutants is completely forced to pass through the filter.

The above examples are merely provides some examples on several embodiments for the present invention, the description is more specific and detailed, it cannot be construed to limit the scope of the present invention. It should be noted that, without departing from the original concept as described present invention, the person with ordinary skill in the art may make a number of modifications and improvements, and these are all within the scope of the present invention. Accordingly, the scope of the present invention should prevail refer to the patent claims as specified in the invention patent.

## Claims

1. An air purification system comprises a first housing combined with a second housing, and the combination of the two housing form the whole or partial of casing of the air purification system;
the said first and second housings both comprise with respectively an air inlet and an air outlet;
a filter is housed within the casing; the filter comprises a filter frame and a filter materials wherein the filter materials is equipped within the filter frame;
the air purification system further comprises a sealing strap to prevent air leakage;
a portion of sealing strap is affixed to one side of the filter frame, whereas the said side of the filter frame is facing to the air inlet, and/or the inside wall of the casing; this portion of sealing strap being pressed onto the filter frame by the air pressure, withstand the air pressure which come from the air inlet ; the other portion of the air sealing strap is sandwiched between the junction of the first and the second housings.

2. An air purification according to claim 1, wherein the sealing strap is made with flexible material.

3. An air purification according to claim 2, wherein the flexible material is polyethylene film.

4. An air purification according to claim 1, wherein the air purification system further comprising a fan located at the air inlet side, blowing the air toward the filter.

5. An air purification according to claim 1, wherein the air purification system further comprising a fan located at the air outlet side, the fan drawing air from the filter.

6. An air purification according to claim 1, wherein filter is accommodated within a storage space of the first housing.

7. An air purification according to claim 1, wherein the filter is accommodated within a storage space of the second housing.

8. An air purification according to claim 1, wherein a portion of filter is accommodated within a storing space inside the first housing and another portion of the filter is accommodated within a storing space inside the second housing.

9. An air purification according to claim 1, wherein the first and second housings are provided at the junction respectively the mutually engaged protruded and recessed parts of serrations.

10. An air purification according to claim 1, the adhesive glue is employed so that the sealing strap and the edge of the filter frame is being sticked together.

11. An air purification according to claim 1, the adhesive glue is employed so that first housing and the second housing is being bonded together.

12. An air purification according to claims 11 and 12, In one embodiment, the sealing strap is adhered with adhesive glue with low to medium degree level of adhesiveness.

13. An air purification according to claim 1, wherein further comprising reinforcement component to reinforce the first and second housings, when they are being assembled to bind together.

14. An air purification according to claim 13, the reinforcement components is provided at the outer side of casing.

15. A draw and blow system from fluid comprises a first housing combined with a second housing, and the combination of the two housing form the whole or partial of casing of the air purification system;
the said first and second housings both comprise with respectively an air inlet and an air outlet;
a filter is housed within the casing; the filter comprises a filter frame and a filter materials wherein the filter materials is equipped within the filter frame;
the air purification system further comprises a sealing strap to prevent air leakage;
a portion of sealing strap is affixed to one side of the filter frame, whereas the said side of the filter frame is facing to the air inlet, and/or the inside wall of the casing; this portion of sealing strap being pressed onto the filter frame by the air pressure, withstand the air pressure which come from the air inlet; the other portion of the air sealing strap is sandwiched between the junction of the first and the second housings.
